# EUROPEAN PATENT SPECIFICATION

(11) **EP 4 137 548 B1**
(45) Date of publication and mention of the grant of the patent: **14.10.2026**
(21) Application number: 21191943.6
(22) Date of filing: 18.08.2021
(51) Int. Cl.: C09J 4/00, C09J 9/02, C08J 5/12

(54) **EMI SHIELDING ADHESIVE COMPOSITION AND ITS USE**
EMI-ABSCHIRMUNGSKLEBSTOFFZUSAMMENSETZUNG UND IHRE VERWENDUNG
COMPOSITION ADHÉSIVE DE PROTECTION CONTRE LES INTERFÉRENCES ÉLECTROMAGNÉTIQUES ET SON UTILISATION

(43) Date of publication of application: 22.02.2023
(73) Proprietor: Henkel AG & Co. KGaA, 40589 Düsseldorf (DE)
(72) Inventor: Kikuchi, Yukari, Yokohama-shi, Kanagawa-ken, 2200031 (JP)

(56) References cited:
- EP-A1- 3 907 252
- JP-A- 2018 159 042
- US-A1- 2018 237 668
- US-B2- 10 827 660

## Description

### Technical Field

The present invention relates to the use of an EMI shielding adhesive composition for assembling a camera module or a sensor, and to a method of assembling a camera module or a sensor using the EMI shielding adhesive composition.

### Background Art

Today's compact camera modules and sensors contain many devices that generate electromagnetic waves. Adhesives that block electromagnetic waves are used in these electronic components to prevent the devices from emitting electromagnetic wave and to protect the devices from external electromagnetic waves. Such electromagnetic shielding adhesives are generally known to exhibit high EMI shielding performance when filled to a high degree with fillers. However, if too much filler is contained, such an adhesive tends to become too hard and brittle, and so its impact resistance performance worsens.

PTL1 discloses a high EMI shielding compound, but it has poor impact resistance due to its high silver content. In order to improve impact resistance, PTL2 suggests reducing the modulus of elasticity by using formulations comprising acrylic resins. PTL3 discloses an EMI shielding adhesive composition comprising a conductive filler a (meth)acrylic resin; and a bismaleimide. The adhesive can be used for assembling a sensor of a camera module.

### Citation List

### Patent Literature

PTL 1: JP2005-294254A
PTL 2: WO2021/075265A
PTL3: JP2018159042A

### Summary of Invention

### Technical Problem

Conventional acrylic resin-containing adhesive compositions with high EMI shielding performance have difficulty in exhibiting sufficient pull strength on metal surfaces. Further, when the compositions are cured at a low temperature, significant oxygen inhibition occurs, which makes it difficult to completely cure the compositions.

An object of the present invention is to provide an acrylic resin-containing adhesive composition having high EMI shielding performance, wherein the composition provides an EMI shielding cured product that has high impact resistant and is sufficiently cured at a low temperature, and when the composition is applied to a metal surface, the adhesion surface has high pull strength.

### Solution to Problem

The present inventor conducted extensive study to solve the above problems and found that they can be solved by an adhesive composition comprising (a) a conductive filler, (b) a (meth)acrylic resin, (c) a tackifier, (d) a bismaleimide, and (e) a radical initiator. The present invention has been completed upon further study based on the above findings and includes the following aspects.

Aspect 1: Use of an EMI shielding adhesive composition for assembling a camera module or a sensor comprising: (a) a conductive filler; (b) a (meth)acrylic resin; (c) a tackifier; (d) a bismaleimide; and (e) a radical initiator.

Aspect 2: a method for assembling a camera module or a sensor, the method comprising bonding an electronic component to a substrate using the EMI shielding adhesive composition.

### Advantageous Effects of Invention

Use of the EMI shielding adhesive composition of the present invention can provide an EMI shielding cured product that has high impact resistant and is sufficiently cured at a low temperature as compared to conventional techniques. Further, when the EMI shielding cured product is applied to a metal surface, the adhesion surface exhibits high pull strength.

### Brief Description of Drawing

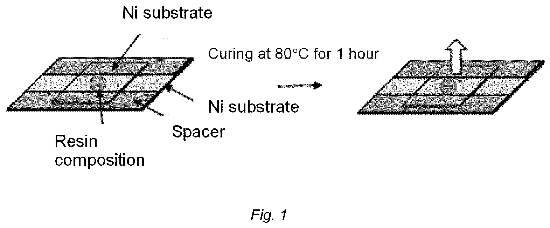

Fig. 1 is a schematic diagram of a pull strength test in the Examples.

### Description of Embodiments

In the present specification, the (meth)acrylate, and (meth)acrylic mean acrylate or methacrylate, and acrylic or methacrylic, respectively.

The EMI shielding adhesive composition used in the present invention comprises: (a) a conductive filler;
(b) a (meth)acrylic resin; (c) a tackifier; (d) a bismaleimide; and (e) a radical initiator.
(a) Conductive Filler

The EMI shielding adhesive composition of the present invention has EMI shielding properties because it contains a conductive filler.

Any conductive fillers providing EMI shielding properties can be used, and such a conductive filler can be suitably selected from known conductive fillers.

The conductive filler preferably contains at least one metal selected from the group consisting of silver, copper, and nickel. The conductive filler may consist of one of these metals, or may substantially consist of an alloy or composite of two or more of these metals.

The conductive filler may have a core-shell structure comprising a core portion and a shell portion, wherein the core portion contains an organic material such as a resin or an inorganic material other than the metals mentioned above, and the shell portion contains at least one metal selected from the metal group mentioned above.

The conductive filler may be spherical, ellipsoidal, needle-shaped, flake-shaped, or amorphous. The conductive filler may be a mixture of two or more of these shapes.

When the conductive filler is spherical, the average particle diameter is preferably 0.01 to 50 µm, more preferably 0.05 to 40 µm, and even more preferably 0.1 to 20 µm, in terms of maintaining good dispersibility and inhibiting clogging during dispensing.

When the conductive filler is ellipsoidal, needle-shaped, flake-shaped, or amorphous, the average particle diameter is preferably 0.01 to 50 µm, more preferably 0.05 to 40 µm, and even more preferably 0.1 to 20 µm, in terms of maintaining good dispersibility and inhibiting clogging during dispensing.

The EMI shielding adhesive composition of the present invention preferably contains the conductive filler in an amount of 60 to 95 wt%, more preferably 65 to 90 wt%, and even more preferably 70 to 85 wt% based on the entire adhesive composition from the viewpoint of attaining excellent EMI characteristics.

Examples of the conductive filler include EA-0101 (produced by Metalor Technologies USA), SF15 (produced by Ames), TC-506 (produced by Tokuriki Honten Co., Ltd.), and FA-DAB-283 (produced by Dowa Holdings Co., Ltd.).

The EMI shielding adhesive composition of the present invention may contain only one, or two or more of the conductive filler.

### (b) (Meth)acrylic resin

Since the EMI shielding adhesive composition of the present invention contains a (meth)acrylic resin, a cured product obtained by curing the composition has excellent impact resistance even though it contains a conductive filler.

The (meth)acrylic resin is a polymer obtained by polymerizing monomers containing at least one hydrocarbon (meth)acrylate monomer wherein the hydrocarbon moiety may be substituted. The hydrocarbon (meth)acrylate monomer may be a multifunctional acrylate. When the (meth)acrylic resin is a copolymer of two or more hydrocarbon (meth)acrylate monomers, it is typically a random copolymer. The substitution structure optionally contained in the hydrocarbon moiety is not particularly limited, and examples include an oxygen atom, a sulphur atom, a nitrogen atom, an ester bond, an amide bond, and a carbonyl group. The hydrocarbon moiety may be substituted with at least two members selected from the above substitution structure group. The hydrocarbon moiety may be saturated or unsaturated. The hydrocarbon moiety may be linear, branched, cyclic, or a combination of at least two of these.

Usable examples of (meth)acrylate monomers include alkyl (meth)acrylates (including multifunctional acrylates). In this case, if the glass transition temperature (Tg) is too high, the elastic modulus increases, and sufficient impact resistance cannot be obtained. The glass transition temperature (Tg) is preferably 50°C or less, more preferable 40°C or less, and even more preferably 30°C or less.

Examples of alkyl(meth)acrylates include n-propyl(meth)acrylate, glycidyl(meth)acrylate, 2-hydroxyethyl(meth)acrylate, 2-methacryloxyethyltrimethoxysilane, 2-methacryloxyethyltriethoxysilane, 3-methacryloxypropyltrimethoxysilane, 3-methacryloxypropylmethyldimethoxysilane, 3-methacryloxypropyltriethoxysilane, 3-methacryloxymethyldiethoxysilane, 4-methacryloxybutyltrimethoxysilane, 4-methacryloxybutyltriethoxysilane, dicyclopentenyl oxyethyl (meth)acrylate, pentamethylpiperidyl (meth)acrylate, tetramethylpiperidyl (meth)acrylate, methoxy polyethylene glycol (meth)acrylate, 2-hydroxy-3-acryloyloxypropyl (meth)acrylate, phenoxyethylene glycol (meth)acrylate, stearyl (meth)acrylate, 2-methacryloyloxyethyl succinate, 3,4-epoxycyclohexylmethyl (meth)acrylate, and the like.

Examples of alkyl multifunctional (meth)acrylates include dipropylene glycol di(meth)acrylate, neopentyl glycol di(meth)acrylate, polyethylene glycol #200 di(meth)acrylate, EO-modified bisphenol A di(meth)acrylate, ethylene glycol di(meth)acrylate, diethylene glycol di(meth)acrylate, triethylene glycol di(meth)acrylate, polyethylene glycol di(meth)acrylate, ethoxylated bisphenol A di(meth)acrylate, 1,10-decanediol di(meth)acrylate, 1,6-hexanediol di(meth)acrylate, 1,9-nonanediol di(meth)acrylate, neopentyl glycol di(meth)acrylate, ethoxylated polypropylene glycol di(meth)acrylate, glycerol di(meth)acrylate, polypropylene glycol di(meth)acrylate, and the like.

Other examples of (meth)acrylate monomers include urethane (meth)acrylate, (poly)ester (meth)acrylate, and (poly)ether (meth)acrylate.

The (meth)acrylic resin is commercially available from a number of manufacturers. The (meth)acrylic resin can be produced according to a typically known method.

Usable examples of (meth)acrylic resin include product FA-512M, produced by Hitachi Chemical Co., Ltd., product FA-711MM, produced by Hitachi Chemical Co., Ltd., product FA-712HM, produced by Hitachi Chemical Co., Ltd., product FA-400M, produced by Hitachi Chemical Co., Ltd., product Light Ester G-201P, produced by Kyoeisha Chemical Co., Ltd., product PHE-1G, produced by Shin-Nakamura Chemical Co., Ltd., product S, produced by Shin-Nakamura Chemical Co., Ltd., product SA, produced by Shin-Nakamura Chemical Co., Ltd., and the like.

The EMI shielding adhesive composition of the present invention preferably contains a (meth)acrylic resin in an amount of 5 to 40 wt%, more preferably 10 to 35 wt%, and even more preferably 15 to 30 wt% from the viewpoint of maintaining excellent EMI shielding characteristics.

The EMI shielding adhesive composition of the present invention may contain only one, or two or more of the (meth)acrylic resin.

### (c) Tackifier

Since the EMI shielding adhesive composition of the present invention contains a tackifier and a bismaleimide described below, the curability of the composition is increased even when the composition is cured at a low temperature, and when the composition is applied to a metal surface, the adhesion surface has high pull strength.

Usable examples of the tackifier include rosins and ester resins derived from them.

A tackifier having a temperature range that exhibits adhesion at the curing temperature and during the subsequent thermal history can be selected. In the present application, the softening point is preferably 150°C or less, more preferably 130°C or less, and even more preferably 110°C. In this specification, the softening point refers to the value measured by the ring-and-ball method.

Usable examples of the tackifier include rosin derivatives such as KE-311 (softening point 90 to 100) and D-125 (softening point 120 to 130) (both produced by Arakawa Chemical Industry Co., Ltd.).

The EMI shielding adhesive composition of the present invention preferably contains a tackifier in an amount of 1 to 15 wt%, more preferably 3 to 13 wt%, and even more preferably 5 to 11 wt%, relative to the resin components excluding the filler, from the viewpoint of inhibiting a significant increase in viscosity and providing excellent adhesion.

The EMI shielding adhesive composition of the present invention may contain only one, or two or more of the tackifier.

### (d) Bismaleimide

Since the EMI shielding adhesive composition of the present invention contains the tackifier mentioned above and a bismaleimide, the curability of the composition is increased even when the composition is cured at a low temperature, and when the composition is applied to a metal surface, the adhesion surface has high pull strength.

The bismaleimide is preferably represented by formula (I), 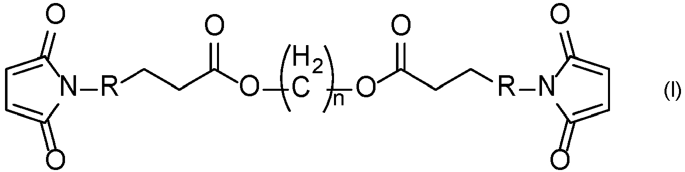 wherein n represents an integer of 1 to 40, and R represents a C₁-C₁₂ linear or at least partially cyclic divalent hydrocarbon.

In the above formula (I), n is preferably 20 to 40, more preferably 30 to 40, and R preferably represents a C₂-C₈ linear or at least partially cyclic divalent hydrocarbon.

The EMI shielding adhesive composition of the present invention preferably contains bismaleimide in an amount of 1 to 30 wt%, more preferably 5 to 25 wt%, and even more preferably 10 to 20 wt%, relative to the resin components excluding the filler, from the viewpoint of increasing adhesion to a metal surface and inhibiting a significant increase in viscosity.

The EMI shielding adhesive composition of the present invention may contain only one, or two or more of the bismaleimide.

### (e) Radical Initiator

Since the EMI shielding adhesive composition of the present invention contains a radical initiator, a polymerization reaction of the (meth)acrylic resin and the bismaleimide occurs, which increases the curability of the composition even when the composition is cured at a low temperature. Further, when the composition is applied to a metal surface, the adhesion surface has high pull strength.

The radical initiator can be suitably selected from known radical initiators.

Specific examples of the radical initiator include Perbutyl O (tert-butyl peroxy-2-ethylhexanoate), Perhexyl O (tert-hexyl peroxy-2-ethylhexanoate), Perocta O (1,1,3,3-tetramethylbutyl peroxy-2-ethylhexanoate), Perbutyl ND (tert-butyl peroxyneodecanoate), and Peroyl TCP (bis(4-tert-butylcyclohexyl) peroxydicarbonate) (all of which are produced by NOF Corporation).

The EMI shielding adhesive composition of the present invention comprises a radical initiator preferably in an amount of 3 to 20 wt%, more preferably 5 to 17 wt%, and even more preferably 7 to 14 wt%, relative to the resin component excluding the filler from the viewpoint of maintaining stability during use.

The EMI shielding adhesive composition of the present invention may contain only one, or two or more of the radical initiator.

### Other Components

The EMI shielding adhesive composition of the present invention may further contain another component, or two or more other components, as necessary.

Examples of other components include adhesive aids (e.g., silane), coupling agents (e.g., titanate), and rheology modifiers (e.g., fumed silica).

### Use

The EMI shielding adhesive composition of the present invention is used for assembling a camera module and a sensor. In this, the camera module is not particularly limited, and examples include small camera modules used for smartphones and the like.

### Examples

Adhesive compositions of Examples 1 to 4 and Comparative Examples 1 and 2 were each prepared by mixing components at the composition ratios shown in Table 1 (the unit of each value in Table 1 being the weight ratio). Specifically, components were added in an arbitrary ratio, and kneaded and dispersed using a planetary mixer, followed by vacuum defoaming, thereby obtaining adhesive compositions.

The following components were used.
(a) Conductive Filler
   Ag flake filler AG1 SA-0201 (produced by Metalor Technologies USA)
   Ag flake filler AG2 DNS-0351P (produced by Daicel Corporation)
   Ag flake filler AG3 SF78 (produced by Ames)
(b) (Meth)acrylic resin
   M-5700 (2-hydroxy-3-phenoxypropylacrylate) produced by Toagosei Co., Ltd.)
   UN-7600 (urethane acrylate oligomer, produced by Negami Chemical Industrial)
(c) Tackifier
   KE-311 (colourless rosin ester, softening point (ring-and-ball method): 90 to 100°C; produced by Arakawa Chemical Industries, Ltd.)
   D-125 (rosin ester, softening point (ring-and-ball method): 120 to 130°C; produced by Arakawa Chemical Industries, Ltd.)
(d) Bismaleimide
   24-468A (C36 branched alkane diyl bis-[6-(2,5-dihydro-2,5-dioxo-1H-pyrol-1-yl) hexanoate]; produced by Henkel AG & Co. KGaA)
(e) Radical Initiator
   Perkadox 16 (produced by Nouryon)

Each evaluation test was conducted as follows. The evaluation results are shown in Table 1.

### Elastic Modulus

The compounded adhesive paste was cured to a thickness of 0.3 mm under the conditions of 80°C and 60 minutes and formed into a sheet. Then, the sheet was cut into 10-mm wide strips, the dynamic viscoelasticity measurement (DMA) was performed in the tensile mode, and the storage modulus E' at -40°C to 250°C was measured.

### Ball Drop Resistance

The compounded adhesive paste was applied to a Ni plate with a size of 10 cm x 5 cm, and an SUS plate with a size of 7 mm x 7 mm was then placed on the Ni plate. In doing so, a 0.1-mm spacer was then inserted between them in order to keep the film thickness constant. The coating amount of the paste was adjusted so that the diameter after pressure bonding would be 3 mm. After curing in an oven at 80°C for 1 hour, a ball with a weight of 30 g was dropped naturally from the vertical direction to the Ni plate. Starting from a height of 10 cm, the height was increased in increments of 10 cm. The distance until the SUS plate became peeled off was defined as ball drop resistance (cm).

### EMI Performance

The compounded adhesive paste was used to form a cured film with a size of 250 mm x 20 mm and a thickness of 100 um. After the film was cured in an oven at 80°C for 1 hour, the measurement was conducted using the dual-focus flat cavity (DFFC) method. The shielding effectiveness (db) at frequencies from 1 GHz to 8.5 GHz was measured.

### Pull Strength

The pull strength was obtained as shown in Fig. 1. Specifically, the pull strength was obtained as follows. A paste was applied to a Ni plate with a size of 10 cm x 5 cm, and another Ni plate with a size of 5 mm x 5 mm was placed on the paste. In doing so, a 0.1-mm spacer is inserted between them in order to keep the film thickness constant. The coating amount of the paste was adjusted so that the diameter after pressure bonding would be 3 mm. After curing in an oven at 80°C for 1 hour, the upper Ni plate was pulled at 10 mm/min in the vertical direction at room temperature by using a tensile compression testing machine produced by Imada Seisakusyo Co., Ltd. The stress when pulling was defined as the adhesion strength.

**Table 1**

| | | Example 1 | Example 2 | Example 3 | Example 4 | Comp. Example 1 | Comp. Example 2 |
|---|---|---|---|---|---|---|---|
| (a) Conductive filler | Ag flake filler AG1 | 85 | 85 | 85 | | 85 | 85 |
| | Ag flake filler AG2 | | | 5 | | | |
| | Ag flake filler AG3 | | | | 70 | | |
| (b) (Meth)acrylic resin | Acrylate M-5700 | 9 | 4 | 4 | 4 | | 9 |
| | UN-7600 | | 5 | 5 | 5 | | |
| (c) Tackifier | KE-311 | 1 | | 1 | 1 | | |
| | D-125 | | 1 | | | | |
| (d) BMI | 24-468A | 4 | 4 | 4 | 4 | | 5 |
| (e) Radical initiator | Perkadox 16 | 1 | 1 | 1 | 1 | | 1 |
| Epoxy resin | ZX1059 | | | | | 20 | |
| Curing agent | PN23J | | | | | 5 | |
| Modulus (GPa) | | 0.2 | 0.1 | 0.1 | 0.1 | 3 | 0.2 |
| Ball drop resistance (cm) | | 60 | 70 | 75 | 75 | 10 | 50 |
| Pull strength (MPa) | | 4.5 | 5.8 | 5.1 | 5.3 | 1.5 | 2.1 |
| EMI performance (db) | | 65 | 58 | 79 | 55 | 72 | 65 |

It is revealed that when the adhesive composition of Comparative Example 2 containing a (meth)acrylic resin in place of an epoxy resin is cured, a cured product having high flexibility can be obtained, as compared to the case in which the adhesive composition of Comparative Example 1 containing an epoxy resin is cured.

Furthermore, it was revealed that when the adhesive compositions of Examples 1 to 4 each containing a (meth) acrylic resin and a tackifier were cured, not only were cured products having high flexibility obtained, but also the tensile resistance of each of the adhesion surfaces against the metal surface was increased.

## Claims

1. Use of an EMI shielding adhesive composition for assembling a camera module or a sensor comprising:
(a) a conductive filler;
(b) a (meth)acrylic resin;
(c) a tackifier;
(d) a bismaleimide; and
(e) a radical initiator.

2. Use of the EMI shielding adhesive composition according to claim 1 for assembling a camera module or a sensor, wherein the conductive filler (a) is present in an amount of 60 to 95 wt% based on the entire adhesive composition.

3. Use of the EMI shielding adhesive composition according to claim 1 or 2 for assembling a camera module or a sensor, wherein the tackifier (c) has a softening point of 150°C or lower.

4. Use of the EMI shielding adhesive composition according to any one of claims 1 to 3 for assembling a camera module or a sensor, wherein the bismaleimide is represented by formula (I): 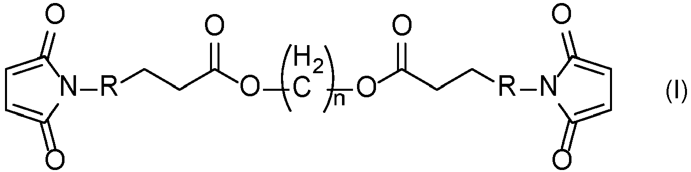 wherein n represents an integer of 1 to 40, and R represents a C₁-C₁₂ linear or at least partially cyclic divalent hydrocarbon group.

5. A method for assembling a camera module or a sensor, the method comprising bonding an electronic component to a substrate using the EMI shielding adhesive composition comprising:
(a) a conductive filler;
(b) a (meth)acrylic resin;
(c) a tackifier;
(d) a bismaleimide; and
(e) a radical initiator.

6. The method according to claim 5, wherein the conductive filler (a) is present in an amount of 60 to 95 wt% based on the entire adhesive composition.

7. The method according to claim 5 or 6, wherein the tackifier (c) has a softening point of 150°C or lower.

8. The method according to according to any one of claims 5 to 7, wherein the bismaleimide is represented by formula (I): 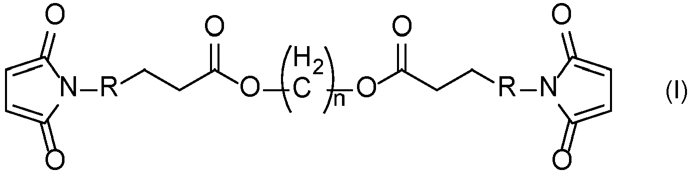 wherein n represents an integer of 1 to 40, and R represents a C₁-C₁₂ linear or at least partially cyclic divalent hydrocarbon group.

## Patentansprüche

1. Verwendung einer EMI-abschirmenden Klebstoffzusammensetzung zum Zusammenbauen eines Kameramoduls oder eines Sensors, umfassend:
(a) einen leitfähigen Füllstoff;
(b) ein (Meth)acrylharz;
(c) einen Klebrigmacher;
(d) ein Bismaleinimid; und
(e) einen Radikalinitiator.

2. Verwendung der EMI-abschirmenden Klebstoffzusammensetzung nach Anspruch 1 zum Zusammenbauen eines Kameramoduls oder eines Sensors, wobei der leitfähige Füllstoff (a) in einer Menge von 60 bis 95 Gew.-%, basierend auf der gesamten Klebstoffzusammensetzung, vorhanden ist.

3. Verwendung der EMI-abschirmenden Klebstoffzusammensetzung nach Anspruch 1 oder 2 zum Zusammenbauen eines Kameramoduls oder eines Sensors, wobei der Klebrigmacher (c) einen Erweichungspunkt von 150 °C oder niedriger aufweist.

4. Verwendung der EMI-abschirmenden Klebstoffzusammensetzung nach einem der Ansprüche 1 bis 3 zum Zusammenbauen eines Kameramoduls oder eines Sensors, wobei das Bismaleinimid durch Formel (I) dargestellt ist: 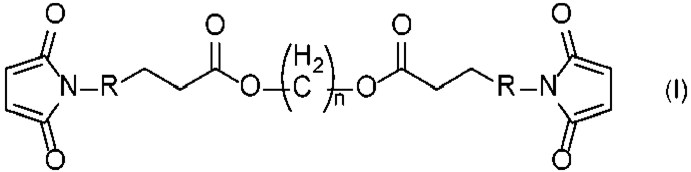 wobei n eine ganze Zahl von 1 bis 40 darstellt und R eine lineare oder mindestens teilweise zyklische zweiwertige C₁-C₁₂-Kohlenwasserstoffgruppe darstellt.

5. Verfahren zum Zusammenbauen eines Kameramoduls oder eines Sensors, das Verfahren umfassend ein Verkleben einer elektronischen Komponente mit einem Substrat unter Verwendung der EMI-abschirmenden Klebstoffzusammensetzung, umfassend:
(a) einen leitfähigen Füllstoff;
(b) ein (Meth)acrylharz;
(c) einen Klebrigmacher;
(d) ein Bismaleinimid; und
(e) einen Radikalinitiator.

6. Verfahren nach Anspruch 5, wobei der leitfähige Füllstoff (a) in einer Menge von 60 bis 95 Gew.-%, basierend auf der gesamten Klebstoffzusammensetzung, vorhanden ist.

7. Verfahren nach Anspruch 5 oder 6, wobei der Klebrigmacher (c) einen Erweichungspunkt von 150 °C oder niedriger aufweist.

8. Verfahren nach einem der Ansprüche 5 bis 7, wobei das Bismaleimid durch Formel (I) dargestellt ist: 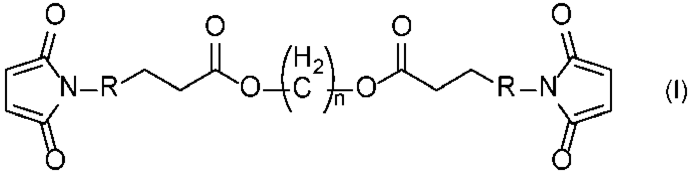 wobei n eine ganze Zahl von 1 bis 40 darstellt und R eine lineare oder mindestens teilweise zyklische zweiwertige C₁-C₁₂-Kohlenwasserstoffgruppe darstellt.

## Revendications

1. Utilisation d'une composition adhésive de blindage EMI pour l'assemblage d'un module de caméra ou d'un capteur comprenant :
(a) une charge conductrice ;
(b) une résine (méth)acrylique ;
(c) un agent collant ;
(d) un bismaléimide ; et
(e) un initiateur de radicaux.

2. Utilisation de la composition adhésive de blindage EMI selon la revendication 1 pour l'assemblage d'un module de caméra ou d'un capteur, dans laquelle la charge conductrice (a) est présente en une quantité de 60 à 95 % en poids sur la base de l'ensemble de la composition adhésive.

3. Utilisation de la composition adhésive de blindage EMI selon la revendication 1 ou 2 pour l'assemblage d'un module de caméra ou d'un capteur, dans laquelle l'agent collant (c) a un point de ramollissement de 150 °C ou moins.

4. Utilisation de la composition adhésive de blindage EMI selon l'une quelconque des revendications 1 à 3 pour l'assemblage d'un module de caméra ou d'un capteur, dans laquelle le bismaléimide est représenté par la formule (I) : 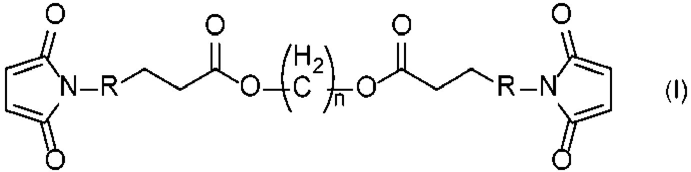 dans laquelle n représente un entier de 1 à 40, et R représente un groupe hydrocarboné divalent en C₁-C₁₂ linéaire ou au moins partiellement cyclique.

5. Procédé permettant d'assembler un module de caméra ou un capteur, le procédé comprenant la liaison d'un composant électronique à un substrat à l'aide de la composition adhésive de blindage EMI comprenant :
(a) une charge conductrice ;
(b) une résine (méth)acrylique ;
(c) un agent collant ;
(d) un bismaléimide ; et
(e) un initiateur de radicaux.

6. Procédé selon la revendication 5, dans lequel la charge conductrice (a) est présente en une quantité de 60 à 95 % en poids sur la base de l'ensemble de la composition adhésive.

7. Procédé selon la revendication 5 ou 6, dans lequel l'agent collant (c) a un point de ramollissement de 150 °C ou moins.

8. Procédé selon l'une quelconque des revendications 5 à 7, dans lequel le bismaléimide est représenté par la formule (I) : 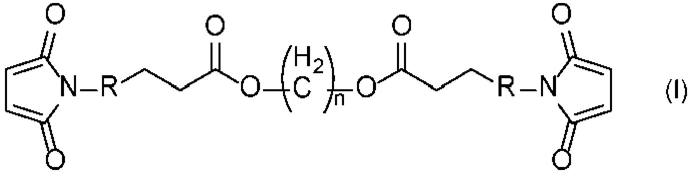 dans laquelle n représente un entier de 1 à 40, et R représente un groupe hydrocarboné divalent en C₁-C₁₂ linéaire ou au moins partiellement cyclique.
